# EUROPÄISCHE PATENTSCHRIFT

(11) **EP 2 411 472 B1**
(45) Veröffentlichungstag und Bekanntmachung des Hinweises auf die Patenterteilung: **24.10.2012**
(21) Anmeldenummer: 10708762.9
(22) Anmeldetag: 12.03.2010
(51) Int. Cl.: C08J 5/24, C08L 67/06, C08L 63/10, C08L 31/04, C08L 33/00

(54) **VERWENDUNG VON SCHUTZKOLLOID-STABILISIERTEN POLYMERISATEN ALS LOW-PROFILE-ADDITIVE (LPA)**
USE OF PROTECTIVE COLLOID-STABILIZED POLYMERIZATES AS LOW-PROFILE ADDITIVE (LPA)
UTILISATION DE POLYMÉRISATS STABILISÉS PAR DES COLLOÏDES PROTECTEURS, EN TANT QU'AGENTS ANTI-RETRAIT (LPA)

(30) Priorität: 24.03.2009 DE 102009001818
(43) Veröffentlichungstag der Anmeldung: 01.02.2012
(73) Patentinhaber: Wacker Chemie AG, 81737 München (DE)
(72) Erfinder: HASHEMZADEH, Abdulmajid, 84508 Burgkirchen (DE); GRÄWE, Rene, 84034 Landshut (DE)
(74) Vertreter: Schuderer, Michael
(86) Internationale Anmeldenummer: PCT/EP2010/053154
(87) Internationale Veröffentlichungsnummer: WO 2010/108791

(56) Entgegenhaltungen:
- EP-A1- 0 337 931
- WO-A1-2007/104639
- GB-A- 1 579 080

## Beschreibung

Die Erfindung betrifft die Verwendung von Schutzkolloid-stabilisierten Polymerisaten als Low-Profile-Additive (LPA), radikalisch vernetzbare Polymerisatzusammensetzungen enthaltend die vorgenannten Low-Profile-Additive sowie die daraus erhältlichen Komposit-Bauteile.

Für die Herstellung von Komposit-Bauteilen werden häufig radikalisch vernetzbare Polymerisatzusammensetzungen auf Basis von beispielsweise ungesättigten Polyesterharzen (UP-Harze) eingesetzt. Ungesättigte Polyesterharze sind erhältlich durch Polykondensation von Dicarbonsäuren oder Dicarbonsäureanhydriden mit Polyolen. Die radikalisch vernetzbaren Polymerisatzusammensetzungen enthalten des Weiteren Monomere mit ethylenisch ungesättigten Gruppen, im Allgemeinen Styrol. Styrol wird der radikalisch vernetzbaren Polymerisatzusammensetzung beispielsweise zugegeben, um das vernetzbare Polymerisat zu lösen und um sicherzustellen, dass die radikalisch vernetzbare Polymerisatzusammensetzung eine fließfähige Masse ist. Als weitere Bestandteile enthalten die radikalisch vernetzbaren Polymerisatzusammensetzungen oftmals noch Fasermaterialien wie Glasfasern, Carbonfasern oder entsprechende Fasermatten (Fiber Reinforced Plastic composites = FPR composites), die zu einer Verstärkung der durch Aushärtung der radikalisch vernetzbaren Polymerisat-zusammensetzungen erhältlichen Komposit-Bauteile führen.

Ein Problem bei der Verarbeitung solcher radikalisch vernetzbaren Polymerisatzusammensetzungen zu Komposit-Bauteilen ist der Volumenschwund während der Härtung der Polymerisatzusammensetzung. Zur Reduzierung des Schrumpfs bei der Aushärtung werden den radikalisch vernetzbaren Polymerisatzusammensetzungen daher sogenannte Low-Profile-Additive (LPA) zugegeben. Low-Profile-Additive reduzieren das Schrumpfen beim Aushärten, bauen Eigenspannungen ab, verringern Mikrorissbildung, und erleichtern das Einhalten von Fertigungstoleranzen.

Bei den LPA handelt es sich üblicherweise um thermoplastische Homo- oder Copolymere von Styrol, Methylmethacrylat oder Vinylacetat, welche in Form von Festharzen vorliegen. So werden beispielsweise in der US-A 3718714 oder der DE-A 102006019686 Copolymere auf Basis von Vinylacetat und ethylenisch ungesättigten Carbonsäuren als LPA für die Herstellung von Komposit-Bauteilen empfohlen. Die EP-A 0075765 empfiehlt als LPA Polymere auf Basis von Vinylacetat bzw. Alkylacrylaten, die zusätzlich ethylenisch ungesättigte Fettsäureestern enthalten.

Die bisher als LPA gängigen Vinylester-Copolymere bewirken zwar im Vergleich zu Polystyrol- und Polymethylmethacrylat vorteilhafterweise zumeist einen großen Antischrumpfeffekt, können aber hinsichtlich der Pigmentierbarkeit nicht befriedigen. Unter guter Pigmentierbarkeit wird verstanden, dass nach Aushärten von Pigmenten enthaltenden radikalisch vernetzbaren Polymerisatzusammensetzungen Komposit-Bauteile mit einem einheitlichen Farbbild erhalten werden; d.h. die Pigmente sind darin gleichmäßig verteilt. Wohingegen bei einer schlechten Pigmentiertbarkeit die Pigmente in den Komposit-Bauteilen ungleichmäßig verteilt und ein sogenannter Marmoreffekt auftritt.

Die EP-A 0337931 beschreibt LPA in Form von in Wasser redispergierbaren, Polyvinylalkohol-stabilisierten Polymerpulvern auf Basis von Vinylacetat-Versaticsäure-Copolymerisaten für die Herstellung von Komposit-Bauteilen bei niedrigen Temperaturen. Polyvinylalkohol ist allerdings in dem üblicherweise in radikalisch vernetzbaren Polymerisatzusammensetzungen enthaltenen Styrol schlecht löslich. Des Weiteren verleihen Polyvinylalkohol enthaltende LPA den damit hergestellten Komposit-Bauteilen hydrophile Eigenschaften, was sich negativ auf die Alterungsbeständigkeit der Komposit-Bauteile auswirkt. Die GB 1579080 offenbart radikalisch vernetzbare Zusammensetzungen enthaltend ungesättigte Polyesterharze, ethylenisch ungesättigte Monomere, Verdickungsmittel, Pigmente, carboxylierte Vinylacetatpolymere als LPA und polymere ober flächenaktive Verbindungen, wie Ethylenoxid/Propylenoxid-Blockcopolymere. 1

Damit die LPA in den radikalisch vernetzbaren Polymerisatzusammensetzungen ihre Wirkung entfalten können, müssen die LPA darin in homogener Form vorliegen. Nachteiligerweise dauert das Auflösen der bisher bekannten LPA in Form von Festharzen bzw. in mit Polyvinylalkohol stabilisierten Polymerpulver sehr lange. Deswegen werden die LPA für gewöhnlich zuerst in Styrol homogenisiert und dann in dieser Form in die radikalisch vernetzbaren Polymerisatzusammensetzungen eingebracht. Diese Vorgehensweise erfordert also einen zusätzlichen, zeitaufwändigen Verfahrensschritt. Ein weiteres Problem stellt die Lagerung der LPA enthaltenden styrolischen Lösungen dar, da derartige Lösungen zur unkontrollierten Polymerisation neigen und zusätzlich Maßnahmen zur Verhinderung der vorzeitigen Polymerisation ergriffen werden müssen.

Vor diesem Hintergrund bestand die Aufgabe, Low-Profile-Additive (LPA) bereitzustellen, die sich in Form von Feststoffen in zumindest einer der Komponenten der radikalisch vernetzbaren Polymerisatzusammensetzungen rasch auflösen oder dispergieren lassen, und die bei Einsatz für die Herstellung von Komposit-Bauteilen zu einem großen Antischrumpfeffekt und einer guten Pigmentierbarkeit führen, ohne die Alterungsbeständigkeit der Komposit-Bauteile negativ zu beeinflussen.

Gegenstand der Erfindung ist die Verwendung von Schutzkolloid-stabilisierten Polymerisaten als Low-Profile-Additive (LPA), dadurch gekennzeichnet, dass die Schutzkolloide erhältlich sind durch radikalisch initiierte Polymerisation von
a) einem oder mehreren ethylenisch ungesättigten Monomeren mit einer oder mehreren zusätzlichen funktionellen Gruppen ausgewählt aus der Gruppe umfassend Carboxyl-, Sulfat-, Sulfonat-, Phosphat-, Phosphonat-, Hydroxyl- und Stickstoff-funktionelle Gruppen (funktionelle Monomere) und gegebenenfalls
b) einem oder mehreren von den Monomeren a) verschiedenen ethylenisch ungesättigten Monomeren, mit der Maßgabe, dass der Massenanteil der Hydroxyl-Gruppen ≤ 10 Gew.-% beträgt, bezogen auf die Gesamtmasse eines Schutzkolloids.

Beispiele für Monomere a) sind ethylenisch ungesättigte Carbonsäuren oder deren Salze, vorzugsweise Acrylsäure, Methacrylsäure, Crotonsäure, Itaconsäure und Fumarsäure, Maleinsäure; Monoester der Fumarsäure oder Maleinsäure oder deren Salze, wie die Ethyl- und Isopropylester; ethylenisch ungesättigte Sulfonsäuren oder deren Salze, vorzugsweise Vinylsulfonsäure, 2-Acrylamido-2-methyl-propansulfonsäure; ethylenisch ungesättigte Phosphonsäuren oder deren Salze, vorzugsweise Vinylphosphonsäure.

Besonders bevorzugte Monomere a) sind ethylenisch ungesättigte Mono- oder Dicarbonsäuren mit 2 bis 15-C-Atomen, insbesondere 2 bis 10 C-Atomen; am meisten bevorzugt sind Acrylsäure und Methacrylsäure.

Die Monomere a) werden zur Herstellung der Schutzkolloide vorzugsweise zu 2 bis 20 Gew.-%, besonders bevorzugt zu 5 bis 15 Gew.-% und am meisten bevorzugt 8 bis 12 Gew.-% eingesetzt, jeweils bezogen auf die Gesamtmasse der insgesamt eingesetzten Monomere zur Herstellung der Schutzkolloide.

Bevorzugte Monomere b) werden ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Vinylaromaten, Vinylhalogenide, Diene und von Ethylen verschiedene Olefine.

Geeignete Vinylester sind beispielsweise Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R, VeoVa10R oder VeoVa11R (Handelsnamen der Firma Shell).

Geeignete Methacrylsäureester oder Acrylsäureester sind beispielsweise Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat, Hydroxyethylacrylat.

Geeignete Diene oder von Ethylen verschiedene Olefine sind beispielsweise Propylen und 1,3-Butadien. Geeignete Vinylaromaten sind beispielsweise Styrol und Vinyltoluol. Ein geeignetes Vinylhalogenid ist beispielsweise Vinylchlorid.

Die Monomere b) werden vorzugsweise zu 75 bis 98 Gew.-%, besonders bevorzugt zu 80 bis 95 Gew.-% und am meisten bevorzugt 85 bis 92 Gew.-% eingesetzt, jeweils bezogen auf die Gesamtmasse der insgesamt eingesetzten Monomere zur Herstellung der Schutzkolloide.

Bei Einsatz von mehreren Monomeren b) wird vorzugsweise mindestens ein
Monomer b1) eingesetzt ausgewählt aus der Gruppe umfassend Butylacrylat, Butylmethacrylat, 2-Ethylhexylacrylat und Vinylester von alpha-verzweigten Monocarbonsäuren mit 5 bis 13 C-Atomen, beispielsweise VeoVa10R oder VeoVa11R (Handelsnamen der Firma Shell), und mindestens ein
Monomer b2) ausgewählt aus der Gruppe umfassend Methylacrylat, Methylmethacrylat, Styrol und Methylstyrol.

Ein bevorzugtes Monomer b1) ist Butylacrylat. Bevorzugte Monomere b2) sind Methylacrylat und Methylmethacrylat.

Die Monomere b1) werden vorzugsweise zu 10 bis 65 Gew.-%, besonders bevorzugt zu 20 bis 50 Gew.-% und am meisten bevorzugt zu 35 bis 45 Gew.-% einbesetzt, jeweils bezogen auf die Gesamtmasse der insgesamt eingesetzten Monomere zur Herstellung der Schutzkolloide.

Die Monomere b2) werden vorzugsweise zu 15 bis 88 Gew.-%, besonders bevorzugt zu 30 bis 70 Gew.-% und am meisten bevorzugt zu 45 bis 55 Gew.-% einbesetzt, jeweils bezogen auf die Gesamtmasse der insgesamt eingesetzten Monomere zur Herstellung der Schutzkolloide.

Bevorzugt werden Schutzkolloide auf Basis von
a) einem oder mehreren Monomeren ausgewählt aus der Gruppe umfassend Acrylsäure, Methacrylsäure, Crotonsäure, Itaconsäure und Fumarsäure und Maleinsäure,
b1) einem oder mehreren Monomeren ausgewählt aus der Gruppe umfassend Butylacrylat, Butylmethacrylat, 2-Ethylhexylacrylat und Vinylester von alpha-verzweigten Monocarbonsäuren mit 5 bis 13 C-Atomen, beispielsweise VeoVa9R oder VeoVa10R (Handelsnamen der Firma Shell), und
b2) einem oder mehreren Monomeren ausgewählt aus der Gruppe umfassend Methylacrylat, Methylmethacrylat, Styrol und Methylstyrol.

Schutzkolloide enthaltend Monomer-Einheiten b1) und b2) haben besonders vorteilhafte Löslichkeitseigenschaften und führen zu Komposit-Bauteilen mit besonders vorteilhaften mechanischen Eigenschaften.

Die Schutzkolloide haben vorzugsweise Glasübergangstemperaturen Tg von mindestens 25°C, besonders bevorzugt von 50 bis 150°C und am meisten bevorzugt von 50 bis 100°C. Die Schutzkolloide haben vorzugsweise eine Wasserlöslichkeit von ≥ 10 g/l. Besonders bevorzugt haben die Schutzkolloide bei pH-Werten von 7,5 bis 12 eine Wasserlöslichkeit von ≥ 10 g/l. Die Löslichkeit der Schutzkolloide in reaktiven Monomeren, insbesondere Styrol, beträgt bei Temperaturen von 20 bis 150°C vorzugsweise ≥ 10 g/l.

Die Polymerisate der Schutzkolloid stabilisierten Polymerisate (Basispolymerisate) können erhalten werden durch radikalisch initiierte Polymerisation von einem oder mehreren ethylenisch ungesättigten Monomeren c) ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Vinylaromaten, Vinylhalogenide, Diene und Olefine.

Als Monomere c) sind beispielsweise dieselben Monomere geeignet, die für die Monomere b) als geeignet aufgeführt sind. Bevorzugte Monomere c) sind Vinylacetat, VeoVa10R, VeoVa11R (Handelsnamen der Firma Shell), Methylacrylat, Methylmethacrylat, n-Butylacrylat, 2-Ethylhexylacrylat, Styrol und Ethylen. Am meisten bevorzugt ist Vinylacetat.

Gegebenenfalls können noch 0,05 bis 5 Gew.-%, vorzugsweise 1 bis 2 Gew.-%, bezogen auf das Gesamtgewicht der Basispolymerisate, Hilfsmonomere copolymerisiert werden. Beispiele für Hilfsmonomere sind ethylenisch ungesättigte Carbonsäuren, vorzugsweise Acrylsäure, Methacrylsäure, Crotonsäure, Itaconsäure oder Fumarsäure, Maleinsäure, ethylenisch ungesättigte Carbonsäurenitrile, vorzugsweise Acrylnitril; Mono- und Diester der Fumarsäure und Maleinsäure wie die Diethyl- und Diisopropylester, sowie Maleinsäureanhydrid, ethylenisch ungesättigte Sulfonsäuren bzw. deren Salze, vorzugsweise Vinylsulfonsäure, 2-Acrylamido-2-methyl-propansulfonsäure.

Die Basispolymerisate haben vorzugsweise Glasübergangstemperaturen Tg von ≤ 35°C, besonders bevorzugt von -40 bis 35°C.

Beispiele für bevorzugte Basispolymerisate sind Vinylester-Homopolymere oder Copolymere von mehreren Vinylestern, Copolymere von einem oder mehreren Vinylestern mit Ethylen, Copolymere von einem oder mehreren Vinylestern mit einem oder mehreren Methacrylsäureestern oder Acrylsäureestern und gegebenenfalls Ethylen, Copolymere von einem oder mehreren Vinylestern mit Vinylchlorid und gegebenenfalls Ethylen. Besonders bevorzugt werden Vinylacetat-Homopolymere; Copolymere von Vinylacetat mit 8 bis 60 Gew.-% Ethylen; Copolymere von Vinylacetat mit 1 bis 60 Gew.-% von einem oder mehreren weiteren, von Vinylacetat verschiedenen, Vinyleestern und gegebenenfalls 5 bis 60 Gew.-% Ethylen; Copolymere von Vinylacetat mit 1 bis 45 Gew.-% von einem oder mehreren Methacrylsäureestern oder Acrylsäureestern und gegebenenfalls 5 bis 60 Gew.-% Ethylen; wobei die Polymere jeweils noch die genannten Hilfsmonomere in den genannten Mengen enthalten können, und sich die Angaben in Gew.-% auf jeweils 100 Gew.-% aufaddieren.

Die Monomerauswahl bzw. die Auswahl der Gewichtsanteile der Comonomere für die carboxyl-funktionellen Polymere bzw. die Polyvinylester erfolgt dabei so, dass im allgemeinen eine Glasübergangstemperatur Tg von -50°C bis +50°C, vorzugsweise -30°C bis +40°C resultiert. Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt..

Die Schutzkolloide können mittels Lösungspolymerisation, Suspensionspolymerisation oder vorzugsweise Emulsionspolymerisation der Monomere a) und b) hergestellt werden. Es wird also vorzugsweise in wässrigem Medium polymerisiert. Die Polymerisationstemperatur ist vorzugsweise zwischen 40°C und 100°C, besonders bevorzugt zwischen 60°C und 90°C. Die Polymerisation erfolgt vorzugsweise bei pH-Werten von 2 bis 7, besonders bevorzugt von 3 bis 5, und kann mit den üblichen organischen oder anorganischen Säuren, Basen oder Puffern, wie beispielsweise Phosphorsäure, Kohlensäure, Carbonsäuren oder Ammoniak oder deren Salze, eingestellt werden. Bei der Copolymerisation von gasförmigen Monomeren wie Ethylen, 1,3-Butadien oder Vinylchlorid kann auch unter Druck, im Allgemeinen zwischen 5 bar und 100 bar, gearbeitet werden.

Die Initiierung der Polymerisation erfolgt mit den für die Emulsionspolymerisation bzw. Suspensionspolymerisation gebräuchlichen wasserlöslichen bzw. monomerlöslichen Initiatoren oder Redox-Initiator-Kombinationen. Beispiele für wasserlösliche Initiatoren sind die Natrium-, Kalium- und Ammoniumsalze der Peroxodischwefelsäure, Wasserstoffperoxid, t-Butylperoxid, t-Butylhydroperoxid, Kaliumperoxodiphosphat, tert.-Butylperoxopivalat, Cumolhydroperoxid, Isopropylbenzolmonohydroperoxid, Azobisisobutyronitril. Beispiele für monomerlösliche Initiatoren sind Dicetylperoxydicarbonat, Dicyclohexylperoxydicarbonat, Dibenzoylperoxid. Die genannten Initiatoren werden im Allgemeinen in einer Menge von 0,001 bis 0,02 Gew.-%, vorzugsweise 0,001 bis 0,01 Gew.-%, jeweils bezogen auf das Gesamtgewicht der Monomere, eingesetzt.

Als Redox-Initiatoren verwendet man Kombinationen aus den genannten Initiatoren und Reduktionsmitteln. Geeignete Reduktionsmittel sind die Sulfite und Bisulfite der Alkalimetalle und von Ammonium, beispielsweise Natriumsulfit, die Derivate der Sulfoxylsäure wie Zink- oder Alkaliformaldehydsulfoxylate, beispielsweise Natriumhydroxymethansulfinat, und Ascorbinsäure. Die Reduktionsmittelmenge beträgt im allgemeinen 0,001 bis 0,03 Gew.-%, vorzugsweise 0,001 bis 0,015 Gew.-%, jeweils bezogen auf das Gesamtgewicht der Monomere.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, vorzugsweise 0,1 bis 2 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropionsäuremethylester, Isopropanol und Acetaldehyd.

Im Allgemeinen wird in Gegenwart von Emulgatoren polymerisiert. Üblicherweise werden 0,5 bis 5 Gew.-% Emulgatoren eingesetzt, bezogen auf die Monomermenge. Geeignete Emulgatoren sind sowohl anionische, kationische als auch nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, oder nichtionische Tenside wie Alkylpolyglykolether oder Alkylarylpolyglykolether mit 8 bis 40 Ethylenoxid-Einheiten.

Die Polymerisation kann unter Vorlage aller oder einzelner Bestandteile.des Reaktionsgemisches, oder unter teilweiser Vorlage und Nachdosierung aller oder einzelner Bestandteile des Reaktionsgemisches, oder nach dem Dosierverfahren ohne Vorlage durchgeführt werden. Vorzugsweise wird so vorgegangen, dass ein Teil der Monomere a), der Monomere b) und ein Teil des Wassers und Reglers und Initiators vorgelegt werden und die verbleibende Menge an Monomer a), Monomer b), Regler, Initiators und gegebenenfalls Wasser zudosiert wird. Bei Durchführung eines Batch-Verfahrens werden alle Monomere, Wasser und Regler und ein Teil des Initiators vorgelegt, und der Initiatorrest wird zudosiert oder stoßweise zugegeben.

Nach Abschluss der Polymerisation kann zur Restmonomerentfernung in Anwendung bekannter Methoden nachpolymerisiert werden, im Allgemeinen durch mit Redoxkatalysator initiierter Nachpolymerisation. Flüchtige Restmonomere können auch mittels Destillation, vorzugsweise unter reduziertem Druck, und gegebenenfalls unter Durchleiten oder Überleiten von inerten Schleppgasen wie Luft, Stickstoff oder Wasserdampf entfernt werden.

Die so erhältlichen wässrigen Dispersionen haben einen Feststoffgehalt von 30 bis 75 Gew.-%. Die Dispersionen werden vorzugsweise durch Zugabe von Wasser auf 10 bis 25 Gew.-% verdünnt. Vorzugsweise wird mit einer Base, vorzugsweise gasförmigem oder wässrigem Ammoniak, auf einen pH-Wert zwischen 8 und 9 eingestellt, wobei üblicherweise klare Lösungen entstehen. Die so erhaltenen Lösungen haben Höpplerviskositäten von vorzugsweise 20 bis 5.000 mPas, besonders bevorzugt 300 bis 1000 mPas (Methode nach Höppler bei 20°C, DIN 53015).

Die Schutzkolloide in Form von wässrigen Dispersionen oder wässrigen Lösungen können nach gängigen Verfahren getrocknet werden, wie beispielsweise mittels Wirbelschichttrocknung, Gefriertrocknung, Walzentrockner oder Sprühtrocknung. Vorzugsweise werden die Dispersionen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt 60°C bis 90°C, je nach Anlage, Tg des Harzes und gewünschtem Trocknungsgrad, gewählt.

Die Herstellung der Basispolymerisate erfolgt in wässrigem Medium und bevorzugt nach dem Emulsions- oder Suspensionspolymerisationsverfahren - wie beispielsweise in der DE-A 102006007282 beschrieben. Die Basispolymerisate fallen dabei in Form von wässrigen Dispersionen an. Bei der Polymerisation können die gängigen Schutzkolloide und/oder Emulgatoren eingesetzt werden, wie in der DE-A 102006007282 beschrieben. Bevorzugt werden als Schutzkolloide die erfindungsgemäßen Schutzkolloide oder teilverseifte oder vollverseifte Polyvinylalkohole mit einem Hydrolysegrad von 80 bis 100 Mol-%, insbesondere teilverseifte Polyvinylalkohole mit einem Hydrolysegrad von 80 bis 94 Mol-% und einer Höpplerviskosität, in 4 %-iger wässriger Lösung von 1 bis 30 mPas (Methode nach Höppler bei 20°C, DIN 53015). Die genannten Polyvinylalkohole sind mittels dem Fachmann bekannter Verfahren zugänglich. Die Schutzkolloide werden im Allgemeinen in einer Menge von insgesamt 1 bis 20 Gew.-%, bezogen auf das Gesamtgewicht der Monomere, bei der Polymerisation zugesetzt.

Die Basispolymerisate in Form von wässrigen Dispersionen können nach gängigen Trocknungsverfahren in Pulver überführt werden. Dabei wird in der Regel eine Trocknungshilfe in einer Gesamtmenge von 3 bis 30 Gew.-%, vorzugsweise 5 bis 20 Gew.-%, bezogen auf die polymeren Bestandteile der Dispersion, eingesetzt. Als Trocknungshilfe sind die vorgenannten Polyvinylalkohole und die erfindungsgemäßen Schutzkolloide bevorzugt.

Alternativ können die erfindungsgemäßen Schutzkolloide, beispielsweise mittels Wirbelschichttrocknung, auf die Basispolymerisate in Form von deren Pulver aufgebracht werden.

Zur Herstellung der Schutzkolloid-stabilisierten Polymerisate in Form von deren Dispersionen können die Schutzkolloid-stabilisierten Polymerisate in Form von deren Pulver in Wasser redispergiert werden. Alternativ können die erfindungsgemäßen Schutzkolloide in Form von deren wässrigen Dispersionen oder Lösungen mit den Basispolymerisaten in Form von deren wässrigen Dispersionen oder in Wasser redispergierbaren Pulver gemischt werden. In einer weiteren alternativen Vorgehensweise können die Basispolymerisate in Form von deren wässrigen Dispersionen mit den erfindungsgemäßen Schutzkolloiden in Form von deren Pulver gemischt werden.

Der mittlere Partikeldurchmesser der Schutzkolloid-stabilisierten Polymerisate in Form von deren Pulver liegt vorzugsweise zwischen 0,1 und 500 Mikrometer, besonders bevorzugt zwischen 1 und 200 Mikromter (Bestimmung nach Coulter).

Ein weiterer Gegenstand der Erfindung sind radikalisch vernetzbare Polymerisatzusammensetzungen enthaltend ein oder mehrere radikalisch vernetzbare Polymerisate aus der Gruppe umfassend ungesättigte Polyesterharze und Vinylesterharze, ein oder mehrere ethylenisch ungesättigte Monomere (reaktive Monomere) und gegebenenfalls Initiatoren, gegebenenfalls Füllstoffe sowie gegebenenfalls weitere Zusätze, dadurch gekennzeichnet, dass zusätzlich ein oder mehrere erfindungsgemäße Schutzkolloid-stabilisierte Polymerisate enthalten sind.

Als reaktive Monomere sind dieselben Monomere geeignet bzw. bevorzugt, die auch für die Polymerisation zur Herstellung der Basispolymerisate geeignet bzw. bevorzugt sind. Besonders bevorzugte reaktive Monomere sind Styrol, Methylmethacrylat, Methylacrylat und Butylacrylat. Das am meisten bevorzugte reaktive Monomer ist Styrol.

Die ungesättigten Polyesterharze sind Reaktionsprodukte von einer oder mehreren Dicarbonsäuren oder einer oder mehreren Dicarbonsäureanhydriden mit einem oder mehreren Polyolen. Die Herstellung der ungesättigten Polyesterharze ist dem Fachmann bekannt.

Vinylesterharze sind Reaktionsprodukte, die durch Polyadditionen oder Veresterungsreaktionen von Phenolderivaten und ethylenisch ungesättigten Mono- oder Dicarbonsäuren oder Dicarbonsäureanhydriden mit 3 bis 20-Kohlenstoffatomen, wie beispielsweise Acrylsäuren oder Methacrylsäuren entstehen. Bevorzugte Phenolderivate sind Bisphenol A und Phenol-Novolak. Die Herstellung der Vinylesterharze ist dem Fachmann bekannt.

Geeignete Initiatoren für die radikalisch vernetzbaren Polymerisatzusammensetzungen sind beispielsweise t-Butylperbenzoat, t-Butylperoxy-2-ethylhexanoat, t-Butylperoxypivalat, t-Butylperoxyneodecanoat, Dibenzoylperoxid, t-Amylperoxypivalat, Di-(2-ethylhexyl)peroxydicarbonat, 1,1-Bis(t-Butylperoxy)-3,3,5-trimethylcyclohexan, Di-(4-t-Butylcyclohexyl)-peroxydicarbonat, Azobisisobutyronitril oder Photoinitiatoren wie Benzophenon, Isopropyl-thioxanthon, Benzile (1,2 Diketone),Hydroxy-alkylketone, α-Aminoketone, Benzilketale.

Geeignete Füllstoffe sind beispielsweise Talkum, Aluminiumhydroxid, Kaolin, Calciumcarbonat, Dolomit, Glaskugeln oder Glasfasern, Quarz, Aluminiumoxid oder Bariumsulfat.

Die radikalisch vernetzbaren Polymerisatzusammensetzungen enthalten vorzugsweise 30 bis 60 Gew.-Teile radikalisch vernetzbare Polymerisate, 5 bis 40 Gew.-Teile erfindungsgemäße Schutzkolloid-stabilisierte Polymerisate, 30 bis 160 Gew.-Teile reaktive Monomere, gegebenenfalls 0,5 bis 2 Gew.-Teile Initiatoren, gegebenenfalls Füllstoffe wie 50 bis 350 Gew.-Teile Calciumcarbonat, Verstärkungsmaterialien, wie 25 bis 450 Gew.-Teile Glasfasern, Aramidfasern, Kohlefasern, gegebenenfalls weitere Additive, wie 0,5 bis 3 Gew.-Teile Formtrennmittel, beispielsweise Zinkstearat, sowie gegebenenfalls weitere Zusatzstoffe, beispielsweise Pigmente, Verdicker, flammhemmende Zusätze.

Die radikalisch vernetzbaren Polymerisatzusammensetzungen sind erhältlich durch Mischen von einem oder mehreren radikalisch vernetzbaren Polymerisaten aus der Gruppe umfassend ungesättigte Polyesterharze und Vinylesterharze, einem oder mehreren ethylenisch ungesättigten Monomeren (reaktive Monomere) und gegebenenfalls von Initiatoren, gegebenenfalls von Füllstoffen, gegebenenfalls von Verstärkungsmaterialien sowie gegebenenfalls von weiteren Zusätzen, dadurch gekennzeichnet, dass zusätzlich ein oder mehrere Schutzkolloid-stabilisierte Polymerisate in Form von deren Pulver beigemischt werden.

Die Schutzkolloid-stabilisierten Polymerisate in Form von deren Pulver können mit den weiteren Komponenten der radikalisch vernetzbaren Polymerisatzusammensetzungen in beliebiger Weise gemischt werden. Beispielsweise können die Schutzkolloid-stabilisierten Polymerisate in reaktiven Monomeren gelöst, emulgiert oder dispergiert werden und in dieser Form mit den weiteren Komponenten der radikalisch vernetzbaren Polymerisatzusammensetzungen gemischt werden. Die Schutzkolloid-stabilisierten Polymerisate werden vorzugsweise mit den radikalisch vernetzbaren Polymerisaten, den reaktiven Monomeren und gegebenenfalls weiteren flüssigen oder gelösten Komponenten der radikalisch vernetzbaren Polymerisatzusammensetzungen gemischt und anschließend mit den restlichen Komponenten der radikalisch vernetzbaren Polymerisatzusammensetzungen, wie Füllstoffen und Verstärkungsmaterialien, gemischt. Alternativ kann auch zuerst eine flüssige Paste aus radikalisch vernetzbaren Polymerisaten, reaktiven Monomeren und gegebenenfalls weiteren Komponenten der radikalisch vernetzbaren Polymerisatzusammensetzungen hergestellt werden, der anschließend Schutzkolloid-stabilisierte Polymerisate sowie gegebenenfalls die restlichen Mengen an den restlichen Bestandteilen der radikalisch vernetzbaren Polymerisatzusammensetzungen zugegeben werden.

Das Mischen der Komponenten zur Herstellung der radikalisch vernetzbaren Polymerisatzusammensetzungen kann unter Einsatz der gängigen, dem Fachmann bekannten Vorrichtungen, wie beispielsweise Reaktoren, Rührkessel oder Mischer, und Rührer, wie beispielsweise Flügel-, Anker- oder Blattrührer, durchgeführt werden.

Ein weiterer Gegenstand der Erfindung sind Komposit-Bauteile erhältlich durch Härten der erfindungsgemäßen radikalisch vernetzbaren Polymerisatzusammensetzungen.

Das Härten der radikalisch vernetzbaren Polymerisatzusammensetzungen erfolgt vorzugsweise bei Temperaturen von ≥ 0°C, besonders bevorzugt von 20 bis 200°C und am meisten bevorzugt von 20 bis 165°C. Vorzugsweise erfolgt das Härten in Gegenwart von einem oder mehreren Initiatoren durch radikalisch initiierte Polymerisation. Gegebenenfalls werden die radikalisch vernetzbaren Polymerisatzusammensetzungen beim Härten bei der jeweiligen Temperatur unter Anwendung von Drücken von ≥ 1 mbar, besonders bevorzugt von 1 bis 200.000 mbar und am meisten bevorzugt von 1.000 bis 200.000 mbar verpresst.

Die Komposit-Bauteile können nach allen gängigen Herstellungsverfahren aus den radikalisch vernetzbaren Polymerisatzusammensetzungen erhalten werden, wie beispielsweise mittels der Sheet Molding Compound Technology (SMC), Bulk Molding Compound Technology (BMC), Resin Transfer Molding (RTM) oder Resin Injection Molding (RIM).

Vorzugsweise werden die Komposit-Bauteile mittels der BMC-Technik (Bulk Molding Compound) oder der SMC-Technik (Sheet Molding Compound) hergestellt.

Bei dem BMC-Verfahren werden die Lösungen der radikalisch vernetzbaren Polymerisate in reaktivem Monomer und die Schutzkolloid-stabilisierten Polymerisate in Form von deren Pulver und gegebenenfalls die weiteren Komponenten wie der Initiator, Füllstoff, Formtrennmittel oder weitere Polymerisate, Low-Profile-Additive oder Zusatzstoffe zu einer pastösen Masse vermischt, danach werden gegebenenfalls Glasfasern zugemischt, und anschließend werden die so erhaltenen radikalisch vernetzbaren Polymerisatzusammensetzungen unter Anwendung von Druck und Temperatur zum Komposit-Bauteil ausgehärtet. Beispielsweise werden mit dieser Technik Reflektoren für Autoscheinwerfer hergestellt.

Bei dem SMC-Verfahren wird analog dem BMC-Verfahren eine pastöse Masse aus styrolischer Polyesterharz-Lösung, Schutzkolloid-stabilisierten Polymerisaten in Form von deren Pulver, Vernetzungskatalysator, Füllstoff, Formtrennmittel sowie gegebenenfalls weiteren Zusatzstoffen hergestellt, welche auf zwei Trägerfolien aufgetragen wird. Anschließend werden geschnittene Glasfaserrovings auf eine der beiden Schichten aufgestreut und schließlich beide Trägerfolien miteinander vereint, so dass die erzeugten Schichten miteinander in Kontakt kommen. Es folgt eine Kompaktierung durch ein System von Walzen. Der resultierende flächige SMC-Compound wird dann aufgerollt und mindestens drei Tage unter definierten Bedingungen gelagert, was als Reifung bezeichnet wird. Schließlich wird das flächige Sandwich von der Folie abgezogen, in Stücke geschnitten und unter Anwendung von Druck und Temperatur zu Formteilen verpresst. Formteile, welche mittels dieser Technik hergestellt werden, werden beispielsweise als Heckklappen von Automobilen eingesetzt.

Die erfindungsgemäßen Schutzkolloid-stabilisierten Polymerisate in Form von deren Pulver sind rieselfähig sowie blockfest und lassen sich leicht in radikalisch aushärtbare Polymerisat-Zusammensetzungen einarbeiten. Polymerisate in Form von Festharzen sind dagegen im Allgemeinen klebrig, neigen zum Verblocken. Die erfindungsgemäßen Schutzkolloid-stabilisierten Polymerisate führen bei Einsatz als LPA zu sehr guten Antischrumpfeigenschaften und auch zu einer sehr guten Pigmentierbarkeit der Komposit-Bauteile. Des Weiteren sind die Schutzkolloid-stabilisierten Polymerisate in Form von deren Pulver lagerstabil und lassen sich rasch auflösen, emulgieren oder dispergieren. Auch in dieser Hinsicht sind die erfindungsgemäßen LPA gegenüber den LPA in Form von Festharzen oder ausschließlich Polyvinylalkohol-stabilisierten Polymerisaten, wie Polyvinylestern, überlegen. Erfindungsgemäß hergestellte Komposit-Bauteile sind wenig hydrophil und neigen nicht dazu, Wasser aufzunehmen, was sich auch positiv auf die Alterungsbeständigkeit der Komposit-Bauteile auswirkt. Dieser Effekt zeigt sich insbesondere auch gegenüber entsprechenden Komposit-Bauteilen, die als LPA ausschließlich mit Polyvinylalkohol-stabilisierte Polyvinylester enthalten.

Die nachfolgenden Beispiele dienen zur weiteren Erläuterung der Erfindung, ohne diese in irgendeiner Weise einzuschränken.

### Herstellung des Schutzkolloids 1:

In einem 3-Liter-Dreihalskolben, ausgestattet mit einem Rückflusskühler und Ankerrührer, wurden 5,2g Natriumlaurylsulfat in 1400g deionisiertem Wasser aufgelöst. Danach wurden 1,54g Kaliumperoxodisulfat, 3,7g Ammoniaklösung (12,5%-ig in Wasser) und 250g der Dosierung 1 vorgelegt und unter Rühren (Drehzahl 150 U/min) in Stickstoffatmosphäre auf 75°C aufgeheizt.
30 Minuten nach Erreichen von 75°C wurde damit begonnen, den restlichen Teil der Dosierung 1 während eines Zeitraums von 2 Stunden und, räumlich davon getrennt, die Dosierung 2 während eines Zeitraums von 2,5 Stunden zuzugeben.
Nach dem Ende der Zugabe der Dosierung 2 wurde für weitere 2 Stunden bei 85°C nachpolymerisiert.
Nach der Abkühlung auf Raumtemperatur wurde die Dispersion in einen 10-Liter-Behälter überführt und unter Rühren mit deionisiertem Wasser verdünnt und der pH-Wert mit einer Ammoniaklösung (12%-ig in Wasser) auf 8,5 eingestellt, wodurch schließlich eine Lösung mit einem Feststoffgehalt von 20 Gew.-% erhalten wurde. Die Glasübergangstemperatur Tg des so erhaltenen Schutzkolloids betrug 70°C.

### Dosierung 1:

| | |
|---|---|
| Methacrylsäure | 102,9g |
| n-Butylacrylat | 411,4g |
| Methylmethacrylat | 514,3g |
| Dodecylmercaptan | 10,3g |

### Dosierung 2:

| | |
|---|---|
| Wasser | 163,0g |
| Kaliumperoxodisulfat | 1,54g |

### Basispolymerisate in Form von deren wässrigen Dispersionen:

### Polymerdispersion 1:

Wässrige Dispersion eines Vinylacetat-Homopolymerisats mit einem Feststoffgehalt von 55% und einer Glasübergangstemperatur Tg von 32°C enthaltend 1 Gew.-% Genapol LRO (Alkylpolyglycolethersulfat; Handelsname der Firma Clariant) und 1 Gew.-% Genapol PF 40 (Blockcopolymer auf Basis von Ethylenoxid und Propylenoxid; Handelsname der Firma Clariant), wobei sich die Angaben in Gew.-% jeweils auf die Gesamtmasse des Homopolymerisats beziehen.

### Polymerdispersion 2:

Wässrige Dispersion eines Copolymerisats auf Basis von 80 Gew.-% Vinylacetat und 20 Gew.-% Ethylen mit einem Feststoffgehalt von 54% und einer Glasübergangstemperatur Tg von -7°C enthaltend 1 Gew.-% Genapol LRO und 1 Gew.-% Genapol PF 40, wobei sich die Angaben in Gew.-% jeweils auf die Gesamtmasse des Copolymerisats beziehen.

### Polymerdispersion 3:

Wässrige Dispersion eines Copolymerisats auf Basis von 90 Gew.-% Vinylacetat und 10 Gew.-% VeoVa10 mit einem Feststoffgehalt von 55% und einer Glasübergangstemperatur Tg von 34°C enthaltend 1 Gew.-% Genapol LRO und 1 Gew.-% Genapol PF 40, wobei sich die Angaben in Gew.-% jeweils auf die Gesamtmasse des Copolymerisats beziehen.

### Herstellung der Schutzkolloid-stabilisierten Polymerisate in Form von deren Pulver:

### LPA-1:

Die Polymerdispersion 1 und das Schutzkolloid 1 wurden so gemischt, dass das Verhältnis von Schutzkolloid 1 zu Polymerdispersion 1 (fest/fest) 4 zu 1 betrug. Es wurde soviel zusätzliches Wasser zugegeben, dass die Dispersion schließlich eine Viskosität von 300 mPa.s hatte.
Die Sprühtrocknung der Dispersion erfolgte in einer Sprühtrocknungsanlage (Einstoffdüsen). Die Austrittstemperatur betrug 65°C.
Es wurde ein rieselfähiges Pulver mit mittlerer Teilchengröße von 120 Mikrometer erhalten (Bestimmung nach Coulter mit dem Gerät Beckmann-Coulter LS100Q).

### LPA-2:

Analog zu LPA-1, mit dem Unterschied, dass an Stelle der Polymerdispersion 1 die Polymerdispersion 2 verwendet wurde.

### LPA-3:

Analog zu LPA-1, mit dem Unterschied, dass an Stelle der Polymerdispersion 1 die Polymerdispersion 3 verwendet wurde.

### V-LPA-4:

Analog zu LPA-2, mit dem Unterschied, dass an Stelle des Schutzkolloids 1 ein Polyvinylalkohol (Verseifungsgrad von 88 Mol-% und Viskosität nach Höppler von 5 mPa.s) als Schutzkolloid zugesetzt wurde.

### Herstellung der Komposit-Bauteile:

Zuerst wurden die in Tabelle 1 aufgeführten Komponenten außer Glasfasern und Füllstoff (Calciumcarbonat (Millicarb)) mit einem Dissolver in einem Behälter 2 Minuten vorgemischt (Harzpaste). Anschließend wurde diese Harzpaste in einem kleinen Laborkneter mit den Glasfasern und dem Calziumcarbonat vermischt. Die Knetzeit wurde dabei zwischen 5 und 20 Minuten variiert.

Der fertige BMC-Compound (Bulk molding compound) wurde styroldicht eingepackt und 2 Tage gelagert (Reifezeit).

Dann wurde der BMC-Compound eine Wickert-Presse eingelegt (Pressbedingungen: 3 Minuten, 160 °C, 730 KN Presskraft, 3 mm Plattendicke).

**Tabelle 1: Radikalisch vernetzbare Polymerisatzusammensetzungen:**

| Komponenten | VBsp.1 [g] | Bsp.2 [g] | Bsp.3 [g] | Bsp.4 [g] | VBsp.5 [g] |
|---|---|---|---|---|---|
| Palapreg P 18-21 (UP-Harz)^{a)} | 62,5 | 62,5 | 62,5 | 62,5 | 62,5 |
| CC Russ 9257-45 (Pigment) | 10 | 10 | 10 | 10 | 10 |
| LPA-1 | | 5 | | | |
| LPA-2 | | | 5 | | |
| LPA-3 | | | | 5 | |
| V-LPA-4 | | | | | 5 |
| Styrol | 24,38 | 18 | 18 | 18 | 18 |
| Peroxid (Trigonox C) | 1 | 1 | 1 | 1 | 1 |
| Peroxid (Trigonox 21) | 0,5 | 0,5 | 0,5 | 0,5 | 0,5 |
| Additive BYK 9010 | 0,5 | 0,5 | 0,5 | 0,5 | 0,5 |
| Luvato MK 35 (Katalysator) | 3 | 3 | 3 | 3 | 3 |
| Ca-Stearat (Gleitmittel) | 4 | 4 | 4 | 4 | 4 |
| p-Hydrochinon (Inhibitor) (10% in MMA)^{b)} | 0,3 | 0,3 | 0,3 | 0,3 | 0,3 |
| Millicarb OG (Füller) | 300 | 300 | 300 | 300 | 300 |
| Hydrochinon (Stabilisator) | 0,03 | 0,03 | 0,03 | 0,03 | 0,03 |
| Owens Corning 163D-14C (4mm Länge) (Glasfaser) | 45 | 45 | 45 | 45 | 45 |
| Summe | 451,2 | 449,8 | 449,8 | 449,8 | 449,8 |
| | | | | | |
| Gehalt an LPA: LPA/Gesamtgewicht | 0,0% | 1,1% | 1,1% | 1,1% | 1,1% |

| | | | | | |
|---|---|---|---|---|---|
| a) Handelsname der Firma DSM; b) MMA = Methylmethacrylat. | | | | | |

Die so erhaltenen, schwarz-pigmentierten Platten wurden nach Abkühlung auf Raumtemperatur wie folgt ausgetestet:
- Die mechanischen Eigenschaften wurden gemäß DIN EN ISO 1425 bestimmt
- Schrumpfwerte (linearer Schrumpf): Volumenänderung in Prozent-Werten bestimmt. Minuswerte zeigen an, dass das Komposit-Bauteil größer als die ursprüngliche Form war.
- Die Pigmentierung wurde nach optischen Beurteilungskriterien bestimmt (- = Marmoreffekt, ungleichmäßige Pigmentverteilung; +++ = homogene Verteilung der Pigmente, einheitlicher Farbeindruck; die Bewertungen mit + bzw. ++ geben entsprechende Zwischenstufen an).

Die Ergebnisse der Austestung sind in Tabelle 2 aufgeführt.

Das Vergleichsbeispiel 1 (ohne LPA) zeigt zwar nur einen geringfügigen Marmoreffekt, aber auf Grund des hohen Schrumpfes weist die Oberfläche starke Defekte und Unebenheiten auf. Beispiel 2 zeigt dagegen einen niedrigen Schrumpf. Weitere Verbesserungen wurden mit den Beispielen 3 und 4 erzielt. Das LPA des Vergleichsbeispiels 5 war durch eine langsame Dispergiergeschwindigkeit in Styrol charakterisiert. Bei dem Versuch mit Vergleichsbeispiel 5 mit einer Dispergierzeit von 5 Minuten wurde ein Komposit-Bauteil mit einer sehr schlechte Oberflächenqualität, einer ungleichmäßigen Pigmentierung und ein höherer Schrumpf beobachtet.
Demgegenüber zeigen die erfindungsgemäßen LPAs 1-3 eine erheblich höhere Dispergiergeschwindigkeit in Styrol, so dass sie ihre volle Wirksamkeit als LPA zeitökonomischer Weise entfalten.

**Tabelle 2: Austestung der Komposit-Bauteile:**

| Eigenschaften | VBsp.1 | Bsp.2 | Bsp.3 | Bsp.4 | VBsp.5 | |
|---|---|---|---|---|---|---|
| Knetzeit | 5 min | 5 min | 5 min | 5 min | 5 min | 15 min |
| Linearer Schrumpf [%] | 0,50 | 0,13 | 0,10 | 0,11 | 0,18 | 0,13 |
| Pigmentierbarkeit | + | + | +++ | ++ | - | ++ |
| E-Modul DIN EN ISO 1425 [Mpa] | 12584 | 14219 | 13602 | 14244 | 12990 | 13631 |

## Patentansprüche

1. Verwendung von Schutzkolloid-stabilisierten Polymerisaten als Low-Profile-Additive (LPA), **dadurch gekennzeichnet, dass** die Schutzkolloide
erhältlich sind durch radikalisch initiierte Polymerisation von
a) einem oder mehreren ethylenisch ungesättigten Monomeren mit einer oder mehreren zusätzlichen funktionellen Gruppen ausgewählt aus der Gruppe umfassend Carboxyl-, Sulfat-, Sulfonat-, Phosphat-, Phosphonat-, Hydroxyl- und Stickstoff-funktionelle Gruppen und gegebenenfalls
b) einem oder mehreren von den Monomeren a) verschiedenen ethylenisch ungesättigten Monomeren,
mit der Maßgabe, dass der Massenanteil der Hydroxyl-Gruppen ≤ 10 Gew.-% beträgt, bezogen auf die Gesamtmasse eines Schutzkolloids.

2. Verwendung von Schutzkolloid-stabilisierten Polymerisaten nach Anspruch 1, **dadurch gekennzeichnet, dass** die Monomere a) ausgewählt werden aus der Gruppe umfassend ethylenisch ungesättigte Carbonsäuren oder deren Salze, Monoester der Fumarsäure oder Maleinsäure oder deren Salze, ethylenisch ungesättigte Sulfonsäuren oder deren Salze und ethylenisch ungesättigte Phosphonsäuren oder deren Salze.

3. Verwendung von Schutzkolloid-stabilisierten Polymerisaten nach Anspruch 1 oder 2, **dadurch gekennzeichnet, dass** die Schutzkolloide die Monomere a) zu 2 bis 20 Gew.-% enthalten, bezogen auf die Gesamtmasse der Schutzkolloide.

4. Verwendung von Schutzkolloid-stabilisierten Polymerisaten nach Anspruch 1 bis 3, **dadurch gekennzeichnet, dass** die Monomere b) ausgewählt werden aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Vinylaromaten, Vinylhalogenide, Diene und von Ethylen verschiedene Olefine.

5. Verwendung von Schutzkolloid-stabilisierten Polymerisaten nach Anspruch 1 bis 4, **dadurch gekennzeichnet, dass** als Monomere b)
ein oder mehrere Monomere b1) ausgewählt aus der Gruppe umfassend Butylacrylat, Butylmethacrylat, 2-Ethylhexylacrylat und Vinylester von alpha-verzweigten Monocarbonsäuren mit 5 bis 13 C-Atomen, und
ein oder mehrere Monomere b2) ausgewählt aus der Gruppe umfassend Methylacrylat, Methylmethacrylat, Styrol und Methylstyrol eingesetzt werden.

6. Verwendung von Schutzkolloid-stabilisierten Polymerisaten nach Anspruch 5, **dadurch gekennzeichnet, dass** die Schutzkolloide die Monomere b1) zu 10 bis 65 Gew.-% enthalten, bezogen auf die Gesamtmasse der Schutzkolloide.

7. Verwendung von Schutzkolloid-stabilisierten Polymerisaten nach Anspruch 5 oder 6, **dadurch gekennzeichnet, dass** die Schutzkolloide die Monomere b2) zu 15 bis 88 Gew.-% enthalten, bezogen auf die Gesamtmasse der Schutzkolloide.

8. Verwendung von Schutzkolloid-stabilisierten Polymerisaten nach Anspruch 1 bis 7, **dadurch gekennzeichnet, dass** die Schutzkolloide eine Glasübergangstemperatur Tg von mindestens 25°C haben.

9. Verwendung von Schutzkolloid-stabilisierten Polymerisaten nach Anspruch 1 bis 8, **dadurch gekennzeichnet, dass** die Polymerisate (Basispolymerisate) erhältlich sind durch radikalisch initiierte Polymerisation von einem oder mehreren ethylenisch ungesättigten Monomeren c) ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Vinylaromaten, Vinylhalogenide, Diene und Olefine.

10. Verwendung von Schutzkolloid-stabilisierten Polymerisaten nach Anspruch 1 bis 9, **dadurch gekennzeichnet, dass** die Schutzkolloid-stabilisierten Polymerisate mittlere Partikeldurchmesser von 0,1 bis 500 Mikrometer haben (Bestimmung nach Coulter).

11. Radikalisch vernetzbare Polymerisatzusammensetzungen enthaltend ein oder mehrere radikalisch vernetzbare Polymerisate aus der Gruppe umfassend ungesättigte Polyesterharze und Vinylesterharze, ein oder mehrere ethylenisch ungesättigte Monomere (reaktive Monomere) und gegebenenfalls Initiatoren, gegebenenfalls Füllstoffe sowie gegebenenfalls weitere Zusätze, **dadurch gekennzeichnet, dass** zusätzlich ein oder mehrere Schutzkolloid-stabilisierte Polymerisate aus Anspruch 1 bis 10 enthalten sind.

12. Komposit-Bauteile erhältlich durch Härten der radikalisch vernetzbaren Polymerisatzusammensetzungen aus Anspruch 11.

## Claims

1. Use of protective colloid-stabilized polymers as low-profile additives (LPAs), **characterized in that** the protective colloids are obtainable by radically initiated polymerization of
a) one or more ethylenically unsaturated monomers having one or more additional functional groups selected from the group encompassing carboxyl, sulfate, sulfonate, phosphate, phosphonate, hydroxyl and nitrogen functional groups and optionally
b) one or more ethylenically unsaturated monomers different from the monomers a),
with the proviso that the mass fraction of the hydroxyl groups is ≤ 10% by weight, based on the total mass of a protective colloid.

2. Use of protective colloid-stabilized polymers according to Claim 1, **characterized in that** the monomers a) are selected from the group encompassing ethylenically unsaturated carboxylic acids or salts thereof, monoesters of fumaric acid or maleic acid or salts thereof, ethylenically unsaturated sulfonic acids or salts thereof, and ethylenically unsaturated phosphonic acids or salts thereof.

3. Use of protective colloid-stabilized polymers according to Claim 1 or 2, **characterized in that** the protective colloids comprise the monomers a) at 2% to 20% by weight, based on the total mass of the protective colloids.

4. Use of protective colloid-stabilized polymers according to Claims 1 to 3, **characterized in that** the monomers b) are selected from the group encompassing vinyl esters of carboxylic acids having 1 to 15 C atoms, methacrylic esters or acrylic esters of carboxylic acids with unbranched or branched alcohols having 1 to 15 C atoms, vinylaromatics, vinyl halides, dienes, and non-ethylene olefins.

5. Use of protective colloid-stabilized polymers according to Claims 1 to 4, **characterized in that** monomers b) used are
one or more monomers b1) selected from the group encompassing butyl acrylate, butyl methacrylate, 2-ethylhexyl acrylate, and vinyl esters of alpha-branched monocarboxylic acids having 5 to 13 C atoms, and
one or more monomers b2) selected from the group encompassing methyl acrylate, methyl methacrylate, styrene, and methylstyrene.

6. Use of protective colloid-stabilized polymers according to Claim 5, **characterized in that** the protective colloids comprise the monomers b1) at 10% to 65% by weight, based on the total mass of the protective colloids.

7. Use of protective colloid-stabilized polymers according to Claim 5 or 6, **characterized in that** the protective colloids comprise the monomers b2) at 15% to 88% by weight, based on the total mass of the protective colloids.

8. Use of protective colloid-stabilized polymers according to Claims 1 to 7, **characterized in that** the protective colloids have a glass transition temperature Tg of at least 25°C.

9. Use of protective colloid-stabilized polymers according to Claims 1 to 8, **characterized in that** the polymers (base polymers) are obtainable by radically initiated polymerization of one or more ethylenically unsaturated monomers c) selected from the group encompassing vinyl esters of carboxylic acids having 1 to 15 C atoms, methacrylic esters or acrylic esters of carboxylic acids with unbranched or branched alcohols having 1 to 15 C atoms, vinylaromatics, vinyl halides, dienes, and olefins.

10. Use of protective colloid-stabilized polymers according to Claims 1 to 9, **characterized in that** the protective colloid-stabilized polymers have average particle diameters of 0.1 to 500 micrometers (Coulter determination).

11. Radically crosslinkable polymer compositions comprising one or more radically crosslinkable polymers from the group encompassing unsaturated polyester resins and vinyl ester resins, one or more ethylenically unsaturated monomers (reactive monomers), and optionally initiators, optionally fillers, and optionally further additions, **characterized in that**
additionally one or more protective colloid-stabilized polymers from Claims 1 to 10 are present.

12. Composite components obtainable by curing the radically crosslinkable polymer compositions from Claim 11.

## Revendications

1. Utilisation de polymères stabilisés par des colloïdes protecteurs en tant qu'additifs à profil bas (LPA), **caractérisée en ce que** les colloïdes protecteurs peuvent être obtenus par polymérisation initiée par voie radicalaire de
a) un ou plusieurs monomères éthyléniquement insaturés contenant un ou plusieurs groupes fonctionnels supplémentaires choisis dans le groupe comprenant les groupes fonctionnels carboxyle, sulfate, sulfonate, phosphate, phosphonate, hydroxyle et azote, et éventuellement
b) un ou plusieurs monomères éthyléniquement insaturés différents des monomères a),
à condition que la proportion en masse des groupes hydroxyle soit ≤ 10 % en poids, par rapport à la masse totale d'un colloïde protecteur.

2. Utilisation de polymères stabilisés par des colloïdes protecteurs selon la revendication 1, **caractérisée en ce que** les monomères a) sont choisis dans le groupe comprenant les acides carboxyliques éthyléniquement insaturés ou leurs sels, les monoesters de l'acide fumarique ou de l'acide maléique ou leurs sels, les acides sulfoniques éthyléniquement insaturés ou leurs sels, et les acides phosphoniques éthyléniquement insaturés ou leurs sels.

3. Utilisation de polymères stabilisés par des colloïdes protecteurs selon la revendication 1 ou 2, **caractérisée en ce que** les colloïdes protecteurs contiennent les monomères a) à hauteur de 2 à 20 % en poids, par rapport à la masse totale des colloïdes protecteurs.

4. Utilisation de polymères stabilisés par des colloïdes protecteurs selon les revendications 1 à 3, **caractérisée en ce que** les monomères b) sont choisis dans le groupe comprenant les esters de vinyle d'acides carboxyliques contenant 1 à 15 atomes C, les esters de l'acide méthacrylique ou les esters de l'acide acrylique d'acides carboxyliques avec des alcools non ramifiés ou ramifiés contenant 1 à 15 atomes C, les composés aromatiques de vinyle, les halogénures de vinyle, les diènes et les oléfines différentes de l'éthylène.

5. Utilisation de polymères stabilisés par des colloïdes protecteurs selon les revendications 1 à 4, **caractérisée en ce que**
un ou plusieurs monomères b1) choisis dans le groupe comprenant l'acrylate de butyle, le méthacrylate de butyle, l'acrylate de 2-éthylhexyle et les esters de vinyle d'acides monocarboxyliques alpha-ramifiés contenant 5 à 13 atomes C, et
un ou plusieurs monomères b2) choisis dans le groupe comprenant l'acrylate de méthyle, le méthacrylate de méthyle, le styrène et le méthylstyrène
sont utilisés en tant que monomères b).

6. Utilisation de polymères stabilisés par des colloïdes protecteurs selon la revendication 5, **caractérisée en ce que** les colloïdes protecteurs contiennent les monomères b1) à hauteur de 10 à 65 % en poids, par rapport à la masse totale des colloïdes protecteurs.

7. Utilisation de polymères stabilisés par des colloïdes protecteurs selon la revendication 5 ou 6, **caractérisée en ce que** les colloïdes protecteurs contiennent les monomères b2) à hauteur de 15 à 88 % en poids, par rapport à la masse totale des colloïdes protecteurs.

8. Utilisation de polymères stabilisés par des colloïdes protecteurs selon les revendications 1 à 7, **caractérisée en ce que** les colloïdes protecteurs ont une température de transition vitreuse Tg d'au moins 25 °C.

9. Utilisation de polymères stabilisés par des colloïdes protecteurs selon les revendications 1 à 8, **caractérisée en ce que** les polymères (polymères de base) peuvent être obtenus par polymérisation initiée par voie radicalaire d'un ou de plusieurs monomères éthyléniquement insaturés c) choisis dans le groupe comprenant les esters de vinyle d'acides carboxyliques contenant 1 à 15 atomes C, les esters de l'acide méthacrylique ou les esters de l'acide acrylique d'acides carboxyliques avec des alcools non ramifiés ou ramifiés contenant 1 à 15 atomes C, les composés aromatiques de vinyle, les halogénures de vinyle, les diènes et les oléfines.

10. Utilisation de polymères stabilisés par des colloïdes protecteurs selon les revendications 1 à 9, **caractérisée en ce que** les polymères stabilisés par des colloïdes protecteurs ont des diamètres de particule moyens de 0,1 à 500 micromètres (détermination selon Coulter).

11. Compositions polymères réticulables par voie radicalaire contenant un ou plusieurs polymères réticulables par voie radicalaire du groupe comprenant les résines de polyester insaturées et les résines d'esters de vinyle, un ou plusieurs monomères éthyléniquement insaturés (monomères réactifs) et éventuellement des initiateurs, éventuellement des charges et éventuellement d'autres additifs, **caractérisées en ce qu'**un ou plusieurs polymères stabilisés par des colloïdes protecteurs selon les revendications 1 à 10 sont également contenus.

12. Éléments composites pouvant être obtenus par durcissement des compositions polymères réticulables par voie radicalaire selon la revendication 11.
